# EUROPEAN PATENT SPECIFICATION

(11) **EP 1 140 477 B1**
(45) Date of publication and mention of the grant of the patent: **12.03.2003**
(21) Application number: 98963973.7
(22) Date of filing: 16.12.1998
(51) Int. Cl.: B29D 30/00, B65G 47/61

(54) **AUTOMATED GREEN TIRE CONVEYANCE SYSTEM**
AUTOMATISCHE FÖRDERVORRICHTUNG FÜR ROHREIFEN
SYSTEME DE TRANSPORT AUTOMATISE DE PNEUS CRUS

(43) Date of publication of application: 10.10.2001
(73) Proprietor: THE GOODYEAR TIRE & RUBBER COMPANY, Akron, Ohio 44316-0001 (US)
(72) Inventor: FLEDDERJOHANN, Paul, Frederick, Clinton, OH 44216 (US); EIZENZIMMER, George, William, Uniontown, OH 44685 (US); McKEE, David, John, Napanee, Ontario K7R-2B5 (CA)
(74) Representative: Leitz, Paul
(86) International application number: US9826724
(87) International publication number: WO00035665

(56) References cited:
- DD-A- 117 200
- FR-A- 2 308 565
- FR-A- 2 399 910
- US-A- 3 030 658
- US-A- 3 053 400
- US-A- 4 778 060

## Description

### TECHNICAL FIELD

The present invention relates to automated monorail conveyance systems for transporting green tires (i.e., unvulcanized tires) within a tire manufacturing factory and more specifically to an elevator system incorporated in the monorail conveyance system for transferring the green tire from a monorail to a tire molding press.

### BACKGROUND OF THE INVENTION

Tire manufacturing factories are arranged into separate areas within which specific tire manufacturing operations take place. Two manufacturing steps having major significance in relation to the present invention are the tire assembly process and the tire curing, or vulcanizing process. These two processes take place in separate locations within a manufacturing operation, typically within a single building of the tire building factory.

In brief summary, tires are assembled in an uncured or unvulcanized state in one part of a factory, and then moved to another part of the factory where they are inserted into heated tire presses wherein the tire is molded under heat and pressure and, in the same process, vulcanized.

More specifically, the tire assembly process involves the use of a tire building machine which includes a cylindrical assembly drum upon which such tire components as the inner liner, the cord-reinforced plies, the beads and the sidewalls of the "green carcass" are assembled into a cylindrical shape. The green carcass then undergoes an initial "blow up" into a toroidal shape more closely resembling a typical tire. The blow-up process typically coincides with the installation upon the green carcass of the belt structure, fabric overlay and tread cap, all of which are typically assembled upon a separate "ring" into which the green carcass is expanded during the blow-up process. After this initial blow-up process in which the green carcass is joined with the belt structure and tread cap, certain additional tire components are typically added, such as the two shoulder skirts which are applied as uncured rubber layers, each of which lies over one of the two respective circumferential juncture lines where the edge of the tread cap joins with the sidewall. This description of the assembly of a "green tire" is only exemplary. Other methods of tire assembly can be used, as when, for example, the tire's sidewalls are assembled upon the green carcass after the blow-up process and after the belt structure and tread cap have been installed upon the toroidally shaped green tire.

After the green tire has been assembled, it must be moved to the portion of the tire-manufacturing facility or building wherein the tire is molded and cured. The molding and curing are performed in a heated tire molding press in which the external rubber surfaces of the green tire are shaped, as with the tread pattern, under pressure. The tire molding press also heats the tire so as to induce the curing or vulcanizing process during which the previously uncured rubber undergoes thermally induced chemical changes that result in the formation of the kinds of firm, stabilized, shape-holding rubber that is typical of a finished tire.

The two above-described processes are separated in time by the transport of the green tires from the tire assembly area to the location of the curing presses. Often, if not typically, the transport of the green tires involves a layover of the green tires within an intermediate storage area. A given green tire is stored until an appropriate press, one that is suited for that specific type of green tire, is ready to receive the tire. Thus the tires that are assembled in a typical tire-building process are commonly not all of the same type or size. In other words, multiple types of tires are assembled in the tire-building region of the factory. Correspondingly, each different tire type (or size) must be cured in a press that has been set up to receive specific tire types and to shape and cure the specific tire types.

A multiplicity of considerations come into play in the period of time from when the tire is assembled to when it is cured. One consideration is whether or not the tire must be physically transported to the intervening storage area prior to being moved to the curing press. Tire transport typically involves the use of such vehicles as fork-lift trucks or similar wheeled vehicles upon which the green tires can be loaded for transport and then unloaded. Another consideration is that each different tire type must be accounted for and readily retrievable from within the storage area. That is, each green tire must be easily identifiable so that it can be retrieved from the storage area and then transported to the appropriate tire curing press for insertion into the press as soon as the appropriate press becomes available to receive the green tire. Another consideration is that the manufacturing facility must be designed to accommodate the wheeled transfer vehicles, that is, it must have wide surfaces "roads" upon which the wheeled vehicles can travel with sufficient room so as to minimize the chances of a collision between the vehicle and stationary objects or with other vehicles or with people. Another consideration is that the storage area must be large enough to accommodate sufficient numbers of each given type of tire so that at no time, ideally, will any curing press or presses be removed from service for want of a tire in need of molding and curing. The storage area also acts as a buffer zone from which a supply of green tires can be withdrawn even if there is a slowdown in the tire assembly process due to disabled machinery or other hold-up problems.

Tires that are moved from the assembly area to the storage area and then to the curing area are labeled in the assembly area. That is, a tag of some sort is put on the tire, identifying its type, size and other parameters which determine the specific curing press type to which it is to be delivered for final molding and vulcanizing. The tag is also placed in such a location on the tire as to indicate the green tire's proper orientation when it is finally delivered to, and loaded into, the curing press. That is to say, the orientation of the tire within the curing press is not random. Rather the tire is preferably placed in the press at a precise rotational orientation determined by numerous factors that are not specifically relevant to the present invention and are therefore not discussed herein.

The above-described transport, storage, press-loading process and intermediate accounting steps in the tire manufacturing process have traditionally been labor intensive in the physical sense. That is, human beings have been used to manually load and unload the green tires upon the transport vehicles as well as to drive the vehicles. Also, it was necessary to locate specific stored tires, to properly read each tire's identifying label, to transport the tire to storage or from storage or to the specific curing presses for each specific tire type, and to load the tire into the press according to the angular orientation needed for that specific tire.

Among the challenges presented by the above-described method of operation is the use of wheeled transport vehicles within the same areas used by human laborers, which presents obvious safety hazards. Another challenge is that large portions of the factory floor area are used by the pathways upon which the transport vehicles move. Yet another disadvantage of previous methods of operation is the amount of time consumed in locating and identifying given tire types within the storage area. Still another disadvantage is that manual movement of the tires, to or from transport vehicles in the tire assembly area and in the storage area, can result in damage to the green tires. Furthermore, the use of human labor in the loading and unloading of heavy green tires can lead to musculoskeletal difficulties for the laborers. Finally, the size of the storage area must be large enough to accommodate both people and vehicles as well as to hold a sufficient number of tires so that specific tire types can be readily and rapidly located and retrieved for transport to the appropriate curing presses.

Various methods of automated and computer-managed tire processing methods have been brought into use in recent years. For example, self-guiding trucks have been used to convey green tires that are loaded and unloaded by means of "robots" of various types and capabilities. These trucks are sometimes guided by floor-mounted rail systems, or even by "reading" lines that are painted upon the floor areas upon which the vehicles move. In one method, described in U.S. Patent No. 5,631,028, self-guiding, self-propelled wheeled "conveyor" vehicles drive along special roadways. The conveyor vehicles carry "pallets," each of which carries four tires. The tire storage area is actually a pallet storage area within which both loaded and empty pallets are stored. Robot arms are used to move the green tires to and from the pallets, which, at the time of loading or unloading, may or may not be situated upon a conveyor vehicle. Among the disadvantages of such a system is the large proportion of factory floor area needed to accommodate the roadways and the storage areas for pallets that might or might not have green tires on them.

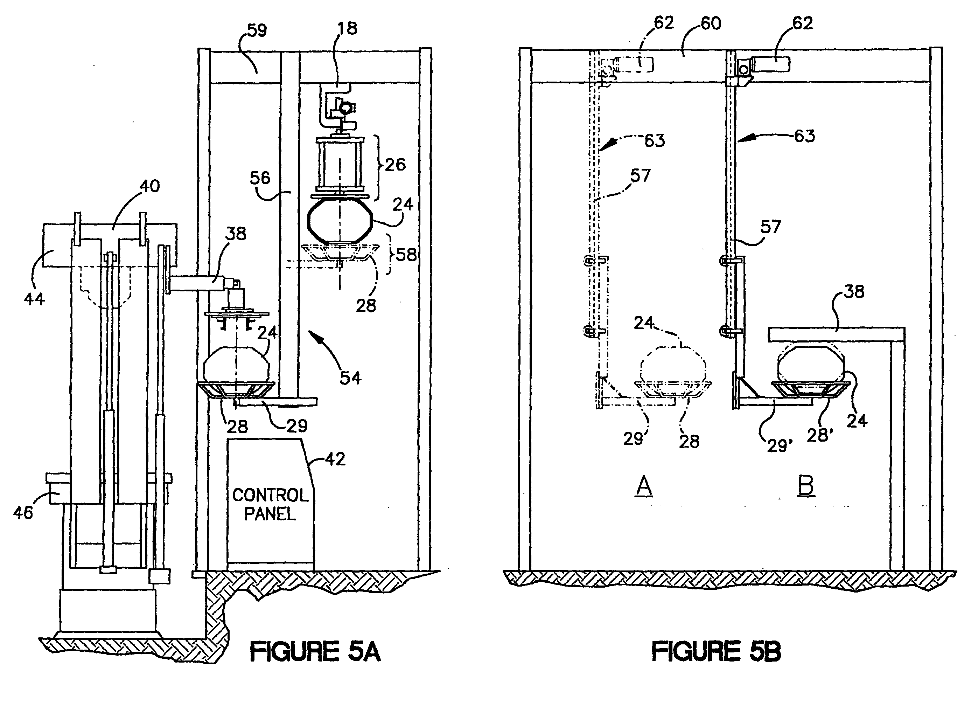

A patent of particular relevance in regard to automated in-factory green tire transport is U.S. Patent No. 4,268,219 ('219), entitled "Green Tire Conveying Method and Apparatus," by Nakagawa et al. FIGURE 5 in the Nakagawa patent shows a conveyor system that appears to incorporate a monorail, though the term "monorail" is not used per se within the patent. The Nakagawa patent addresses centrally located automated control from a site within the factory. The '219 patent also refers to the use of a "demand signal," which is not specified as being by wire or radio, as a communication link with the rail-borne "trucks." The apparent monorail trucks of the '219 patent are able to deliver tires directly into the tire presses. The Nakagawa patent also includes a buffer storage area located between the tire-building part and the tire press part of the factory.

### OBJECTS OF THE INVENTION

It is an object of the present invention to provide an automated monorail transport system as defined in one or more of the appended claims and, as such, having the capability of being constructed to accomplish one or more of the following subsidiary objects.

One object of the present invention is to provide an automated monorail transport system for automating that part of the tire manufacturing process that involves the transport of tires from the location of green tire assembly to the location of the curing presses where the green tires are molded and vulcanized.

Another object of the present invention is to provide an automated monorail transport system to minimize the portion of factory floor area that would otherwise be given over to roadways wide enough to safely accommodate both human beings and powered wheeled vehicles.

Yet another object of the present invention is to provide an automated monorail transport system that maintains a real-time, computer-based accounting of the location in storage or in transport of each green tire according to type and curing press to which it is to be delivered.

Still another object of the present invention is to provide an automated monorail transport system with automated means by which to rotate each green tire to an optimal angular orientation prior to insertion into the tire molding press.

Another object of the present invention is to provide an automated monorail transport system that reduces the number of monorail carriers used to transport green tires from the buffer storage to the curing presses.

Another object of the present invention is to provide an automated monorail transport system that reduces the number of human beings involved in the physical handling, loading and unloading of green tires and to eliminate both the ergonomic problems associated with manual handling of green tires and the potential for manual-induced damage to uncured tires.

Still another object of the present invention is to provide an automated monorail transport system with automated means for identifying and sorting green tires during transport from the tire assembly area to the tire curing/vulcanizing area of the factory.

Another object of the present invention is to provide an automated monorail transport system that incorporates multiple tire-storage buffers between the monorail and the tire press.

A further object of the present invention is to provide an automated monorail transport system that accommodates tire presses of the kind that open vertically.

Yet another object of the present invention is to provide an automated monorail transport system with central computer management of the automated monorail tire transport system.

### SUMMARY OF THE INVENTION

The present invention relates to automated monorail conveyance systems for transporting green tires (i.e., unvulcanized tires) within a tire manufacturing factory. More specifically, the present invention relates to the transport of a plurality of green tires to a plurality of tire curing presses. It includes a monorail track upon which ride one or more monorail transport carriers. The conveyance system is characterized by one or more elevator systems located near each of the plurality of the tire presses for receiving green tires from the monorail carriers. Each of the elevator systems has an elevator that is vertically moveable for conveying green tires from the monorail carriers to a loader of the tire press. The elevator can ride upon a vertical support rail and includes a supporting arm with a basket mounted at the distal end of the arm. In operation, the basket receives a green tire from a monorail truck at a first location and is then moveable along a vertical path to a second location where the green tire is unloaded from the basket by a loader of the press.

In one embodiment, the supporting arm and basket of the elevator system can be angularly moveable in a horizontal plane about a vertical axis extending through the vertical support rail.

In a second embodiment, the elevator system can also be moveable in horizontal linear translation from the second location to a third location where the tire is unloaded by a press loader.

A tire-grasping portion of each of the monorail carriers can angularly orient each green tire about the tire's axis such that subsequent angular motions of the elevator system and the press loader are taken into account in delivering the green tire at a predetermined angular orientation to the press. The basket of the elevator system in conjunction with the press loader associated with each press act functions as a buffer storage for the green tires in process.

The present invention is also directed to a method for conveying a plurality of green tires to a plurality of tire-curing presses with one or more monorail transport carriers. The method includes a transferring step wherein each green tire is transferred from one of the monorail carriers to a loader of a tire press. The transferring step includes movement of a green tire along a vertical path from a first location where the tire is transferred from the monorail carrier to an elevator to a second location. The transferring step can include angular movement of the green tire within a horizontal plane from its position at the first location to its position at the second location where the green tire can be transferred to the loader of the press. The transferring step of the present invention can also involve a horizontal translation movement of the green tire from the second location to a third location where the green tire is transferred to the loader of the press.

The method of the invention can also include a step of angularly orienting each green tire about its axis while still being carried by the monorail carrier in such a way that subsequent angular motions while transferring the green tire are accounted for placing the tire in the tire press at a predetermined angular orientation. The method of the invention further includes providing a buffer storage for the green tires between the location where the green tire is transferred to the elevator system from the monorail carrier and the press loader.

### BRIEF DESCRIPTION OF THE DRAWINGS

The structure, operation, and advantages of the invention will become further apparent upon consideration of the following description taken in conjunction with the accompanying drawings, wherein:
**FIGURE 1** is a schematic diagram showing the layout of a factory in which green tires are assembled in one area and then transported to another area where they are molded and cured;
**FIGURE 2A** is a side view schematic showing the monorail, the elevator system, the tire press and press loader of the present invention;
**FIGURE 2B** is a front view of the tire elevator and basket of the present invention;
**FIGURE 3A** is a front view schematic of an open tire press;
**FIGURE 3B** is a front view schematic of a closed tire press;
**FIGURE 4** is a top view schematic of a tire press and its loaders;
**FIGURE 5A** is a side view of a ceiling-suspended tire-receiving elevator and basket; and
**FIGURE 5B** is a side view of another embodiment of a ceiling-mounted tire-receiving elevator and basket which is able to translate rather than having a swiveling basket arm.

### DEFINITIONS

"Axial" and "Axially" means the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Belt Structure" or "Reinforcement Belts" or "Belt Package" means at least two annular layers or plies of parallel cords, woven or unwoven, underlying the tread, unanchored to the bead, and having both left and right cord angles in the range from 18° to 30° relative to the equatorial plane of the tire.

"Breakers" or "Tire Breakers" mean the same as belt or belt structure or reinforcement belts.

"Carcass" means the tire structure apart from the belt structure, the tread, and the undertread over the plies, but including the beads.

"Casing" means the carcass, belt structure, beads, sidewalls and all other components of the tire excepting the tread and undertread.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Crown" or "Tire Crown" means the tread, tread shoulders and the immediately adjacent portions of the sidewalls.

"Curing" is the same as "vulcanizing" which refers to the cross-linking of the polymers comprising the elastomeric rubber compounds which are, by weight, the main constituents of tires.

"Elevator system" refers to the intermediate tire conveying device which receives individual green tires from the monorail carrier and moves the tires to within grasping range of the loaders on a tire press.

"Gauge" refers to thickness.

"Inner Liner" means the layer or layers of elastomer or other material that form the inside surface of a tubeless tire and that contain the inflating gas or air within the tire.

"Lateral" means a direction parallel to the axial direction.

"Molding" is the process by which a green tire is subjected to heat and pressure within a curing press that imprinted the tire's finished shape and structure and vulcanizes the tire's uncured rubber components.

"Ply" means a cord-reinforced layer of rubber-coated radially deployed or otherwise parallel cords.

"Radial" and "radially" mean directions radially toward or away from the axis of rotation of the tire.

"Shoulder" means the upper portion of sidewall just below the tread edge.

"Sidewall" means that portion of a tire between the tread and the bead.

"Tread Cap" refers to the tread and the underlying material into which the tread pattern is molded.

"Tread width" means the arc length of the tread surface in the plane that includes the axis of rotation of the tire.

"Truck" or "Carrier" refers to the monorail vehicles that convey green tires within the factory.

"Vulcanizing" is the same as "curing" which refers to the cross-linking of the polymers comprising the elastomeric rubber compounds which are, by weight, the main constituents of tires.

### DETAILED DESCRIPTION OF THE INVENTION

The GREEN TIRE AUTOMATED MONORAIL SYSTEM (GTAMS) of the present invention is intended for use as an integral part of an automated tire factory. GTAMS is referred to within the following description variously as a monorail, a monorail system, an automated monorail transport system and as a green tire monorail conveyance system unless the term "monorail" is used in specific contextual reference to the monorail component of the green tire automated monorail system.

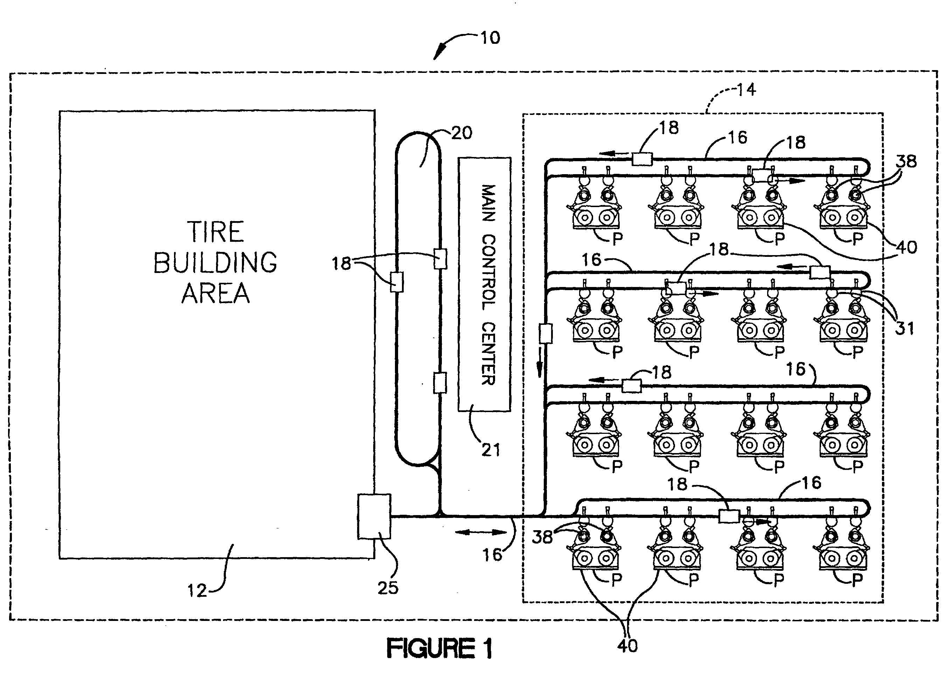

**FIGURE 1** shows a schematic floor layout of an automated green tire conveyance system **10** contained within a tire factory. The tire factory comprises two main regions which the green tire conveyance system services: a tire building area **12**, where the green tires are assembled on tire-building drums and then expanded into characteristic toroidal tire shapes, and the tire press area **14.** The tire press area **14** contains a plurality of pairs of presses **40**, which are also designated by the letter **P**. Adjacent to the rows of presses **P** are rails **16** along which run a plurality of self-powered, monorail carriers **18**. Each of the carriers **18** transports a single green tire from the tire assembly area to the specific presses **P** that are prepared to receive, mold and cure specific types and models of green tires. For example, tires for large vehicles such as earth-moving vehicles are sent to presses that are prepared to receive large tires, while low-profile passenger vehicle tires are conveyed by the monorail system to other types of presses. Tires are moved from the tire building area **12** by way of exit portal **25** and then onto the monorail carriers **18** which run on the monorail tracks **16** which lead to the tire presses designated by **P**.

In addition to the rails **16** of the GTAMS system within the factory **10**, the GTAMS can include a monorail carrier maintenance and/or buffer storage loop **20** and a main control center **21.** Green tires can be stored in the buffer storage loop **20** if the system is not ready to immediately transfer the tires to the press area **14**. The main control center **21** comprises a system of computers and software and radio transmission systems such as for example the type of system disclosed in U.S. Patent No. 4,268,219 of Nakagawa et al., which work together to accomplish the following green-tire transport functions:
1. Maintain a running inventory of all tires in the production loop according to tire type and each tire's location within the factory and its processing status;
2. Maintain a graphical display of the factory floor and the locations of each monorail carrier **18**, whether the carrier is carrying a green tire or is returning to the tire assembly area **12** to receive a green tire, or is picking up a tire in the buffer storage/monorail carrier maintenance loop **20**; and
3. Maintain central radio linkages, for data and operational control, to all of the monorail carriers, feeding information to, and receiving data from each carrier, directing its movements and coordinating the movement of each carrier with respect to each other carrier and with respect to destinations while en route.

### Barcode Reader, Tire Rotation, and Real-Time Tire Tracking

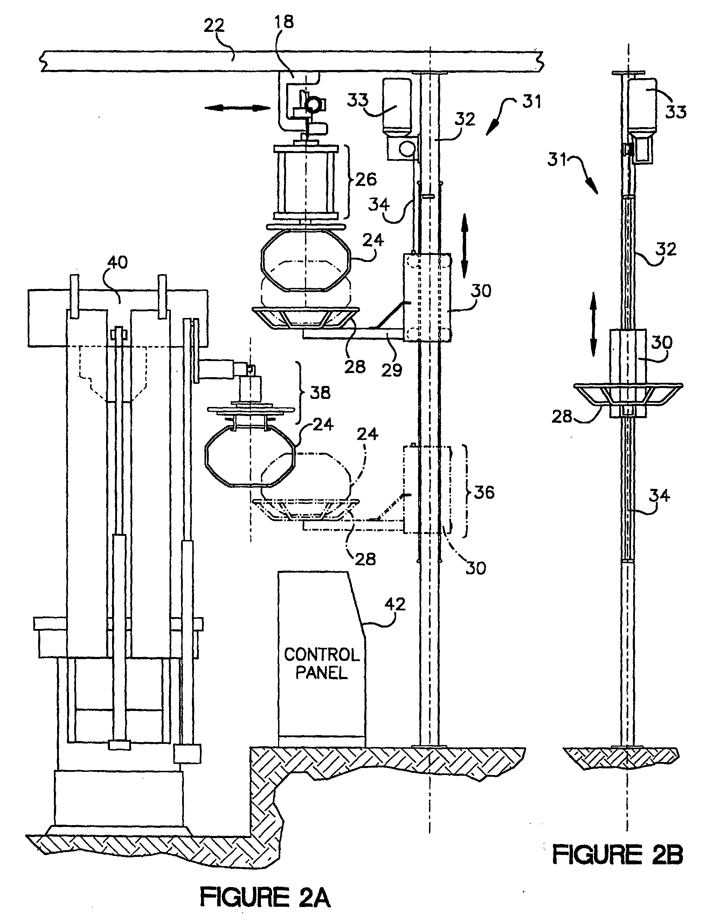

In addition to the functions listed above, each monorail conveyor carrier **18** carries a device that is able to read the tags, such as barcode labels that are placed on each green tire **24**, as is shown in **FIGURE 2A**. Typically, individual tags, such as barcode labels are affixed to each green tire at or near the completion of the tire building process within the tire building area **12** of the factory **10**. Each monorail conveyor carrier **18** carries a single green tire **24** in such a way that the tire's equatorial plane is horizontal, which means that the tire's axis is vertically oriented. The monorail carrier's tire-grasping mechanism **26** can grasp the tire **10** by one of the tire's bead regions. The tire-grasping mechanism **26** of each monorail carrier **18** is able to rotate the tire about the tire's axis in order to find and read the tire's barcode label, which specifies the tire type and the angular orientation (about the tire's axis) at which the tire should be disposed when the tire is delivered to the press **40** (**FIGURE 2A).** In other words, the green tire **24** carried by the monorail carrier **18** can be rotated for two purposes: (1) so that the barcode can be oriented in order to be read by the barcode reader/scanner; and (2) so that the green tire can be properly angularly oriented so that, when the green tire **24** is loaded by the press loader **38** into the press **40** (**FIGURE 2A**), the tire's angular orientation within the press will be in accordance with the specific tire's design needs For example, the tire can be angularly oriented to take into account the uniqueness of each green tire with respect to the location of the lettering on the sidewalls of the tire as well as taking into account the location of the "tread splice" and other artifacts of both tire design and tire construction. The information contained in the barcode also informs the main control center **21** as to the type of tire being carried on each particular carrier **18**. The geographic location of each tire inside the factory is continually monitored and known at the main control center as a result of the two-way radio frequency (RF) communication link between the main control center and each monorail carrier **18**.

The tire grasping mechanism **26** of each carrier **18** is able to angularly orient each tire **24** in such a way as to take into account the angular motions of the press loader **38** and the elevator **30**. Thus, each green tire **24** arrives within the respective press at a predetermined angular orientation with respect to that press.

### Summary of the Sequence of Operation of the Monorail System

**FIGURE 2A** shows, in summary, a monorail carrier **18** suspended from a monorail **22**. Green tire **24** is suspended by the carrier's tire-grasping mechanism **26**, which can expand or contract in order to grasp or release the green tire **24**. The tire-grasping mechanism **26** of the monorail carrier **18** releases the green tire **24** into an elevator system **31** which includes a basket **28** attached to an elevator **30** that rides on a vertical support rail **32**.

The tire-grasping mechanism **26** of the monorail carrier **18** can rotate the tire **24** about its axis, as will be described herein above. A motor **33**, secured to support rail **32**, controls the vertical motion of the elevator **30** and its basket **28**. **FIGURE 2B** shows a second view of the elevator system **31**, with its elevator **30**, vertical support rail **32**, and the chain or cable **34** driven by conventional means, such as the motor **33**, to raise or lower the basket **28** and the elevator **30**. The term "elevator system" generally refers to the intermediate tire conveying system, comprising an elevator **30** with an attached basket **28** that can move upward or downward in a vertical path with respect to vertical support **32**, which receives individual green tires from the monorail carrier and moves the tires to within grasping range of the press loader **38** by each tire press **40** as discussed hereinafter.

The monorail carrier **18** deposits the green tire **24** at a first or upper location in the basket **28** attached to the elevator **30**, after which the elevator **30** moves along a vertical path to a second or lower position or location **36**, as shown in **FIGURE 2A**. The green tire **24** in the basket **28** attached to the elevator **30** in the lower position **36** can then be carried in the basket **28**, as the basket moves through a circular arc with respect to elevator **30**, the radius of which arc is defined by the arm **29** which supports the basket **28**. The basket can either move through the arc in conjunction with its movement along the vertical path or subsequent to arriving at the lower location where the green tire is transferred to the loader **38**, which is typically an integral part of the tire press **40**. With the latter construction, the arm portion of the loader **38** rotates within a horizontal plane in such a way as to allow the loader to retrieve the tire **24** from the elevator basket **28** and then deliver the tire into the press **40**. A control panel **42** at the site of the press **40** allows onsite manual control and override of the automated processes in the event of emergencies or in case of the need for specialized control or override of the automated processes.

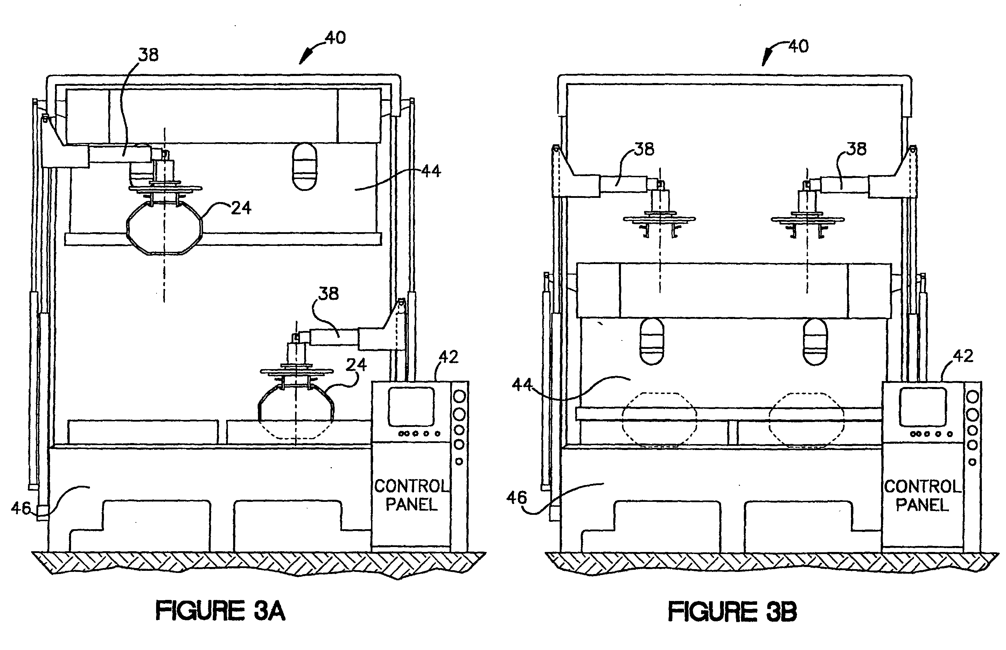

**FIGURE 3A** shows the tire press **40** in the open position, with the upper mold half **44** raised. The press loaders **38** which operate in conjunction with each press **40** have two degrees of motion: they can move up and down, and they can rotate within a horizontal plane. For example, as shown in **FIGURE 2A**, loaders **38** can retrieve green tires from the basket **28** of the elevator system **31** and then move each green tire **24** into the press **40**. **FIGURE 3B** shows the tire press **40** in the closed position, with the upper mold half **44** in a lowered position in relation to the lower mold half **46**. The press **40** is closed after the tires **24** have been loaded into the press.

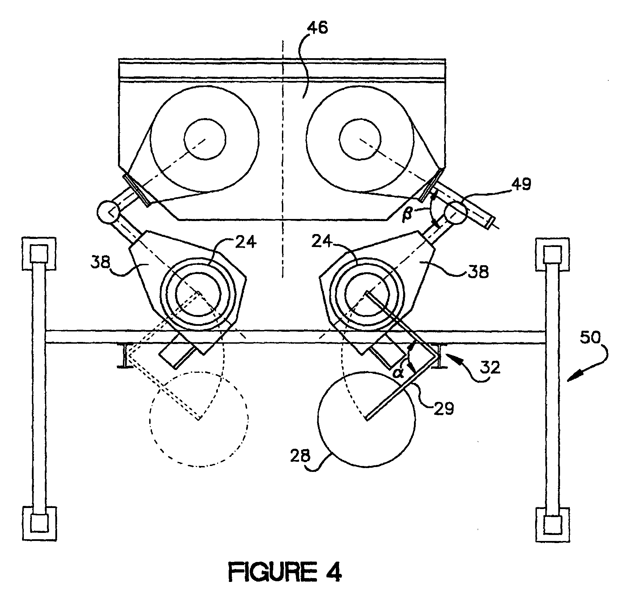

**FIGURE 4** is a top view of the lower part **46** of the press **40**. Superstructure **50** supports the vertical support rails **32** of the elevator system **31** with its elevator **30** and the elevator's basket **28** and moveable arm **29**. The basket **28** is able to swing through an angular arc α within a horizontal plane from the first location where the basket **28** receives the green tire **24** to the lower, second location prior to the green tire being handed off to the loader **38** of the press. The arm of the loader **38** is able to pivot through an angle β about the loader's vertical support structure **49** as it receives the tire **24** from the basket **28** of the elevator **30** (which is unlabelled as such in **FIGURE 4** and shows only the vertical support rail or girder **32** upon which the elevator moves upward or downward).

It is important to note that the use of the press loaders **38** are necessary due to the way in which modern tire presses open and close. Referring back to **FIGURES 3A** and **3B**, the top part or mold half **44** of the press **40** lifts vertically upward from the lower part or mold half **46** of the press. Older style presses, ones of the "watch-case" design, had upper mold sections that opened by hinging backward in such a way that the lower mold sections of the press were directly accessible from above. Thus the older watch-case style presses allowed for the loading of the green tires into the press directly from above, rather than requiring them to be brought in from the side, as in the case of the newer style presses in which the upper mold section rises vertically rather than hinging backward and out of the way. Thus, there is a need for the elevator system **31** of the present invention, and the associated parts such as the vertical support rail or beam **32**, the elevator **30** and arm **29** and the basket.

In operation, the elevator **30** receives in the basket **28** the green tire **24** from the monorail carrier **18** at a first location. The elevator **30** is then lowered with its basket to a second location at which the arm and basket can angularly move within a horizontal plane with respect to the elevator so that the tire can be transferred to the press loader **38** of the press **40**. Finally, the press loader **38** loads the green tire by moving the tire horizontally into the press. While the basket **28** is generally unmovably attached to the arm **2**9, it is also within the terms of the invention to provide a power system (not shown) that rotates the basket **28** with respect to arm **29** so that the angular position at which the green tire is loaded into a tire press can be easily controlled.

### Intermediate Tire Storage and Tire Storage Buffers

The elevator system **31** and its related parts, shown in **FIGURES 2A, 2B, 4** and **5A,** are an essential feature of the present invention. The elevator system **31** allows for the automated transfer of green tires into the new style tire presses, i.e., presses which have top mold halves **44** that lift vertically off from the bottom mold halves **31** of the present invention. Another significant advantage of using the elevator system, as an intermediate step in the transfer of the green tire from the monorail to the tire press, is that the elevator **30** provides an inherent intermediate tire storage or buffer for tires awaiting processing within each respective tire press **40** while the monorail carrier is free to transfer another green tire to another press. Earlier style automated green tire transfer systems, most notably the one described in U.S. Patent 4,268,219 by Nakagawa et al., allowed a remotely controlled overhead conveyor system to deliver green tires directly into older style presses in which the top of the press, when open, was hinged back out of the way from the bottom of the press. That is to say, the top of the old-style watch-case press did not interfere with the vertical delivery of the tire directly downward into the press. The disadvantage of these prior art systems was that more monorail carriers were required or the transfer was slower because the monorail carrier was held up at a specific press until the tire was inserted therein. By contrast, the present invention reduces the need for monorail carriers because the use of the elevator system **31** introduces an additional tire buffer storage system right at the location of each of the tire presses whereby a green tire can be delivered and immediately transferred into a basket **28** to free up the monorail carrier. Moreover, the tires can then be transferred to the tire loader associated with each press so that two tires are in the tire buffer storage provided at each press, i.e. one in the basket and the other in the loader. In other words, the elevator systems, in conjunction with the press loaders associated with each tire press, provide at the site of each press, a two-tier tire storage buffer, thereby increasing the efficiency and speed of transporting green tires from the building area **12** to the tire press area **14**.

**FIGURE 5A** shows a second embodiment of an elevator system **54**. The vertical support rail **56** of the elevator system **54** is suspended from an upper support beam **59** which, in **FIGURE 5A**, is ceiling-suspended. In other words, the vertical support rail **56** is not mounted upon or anchored to the floor, as is the embodiment shown in **FIGURES 2A** and **2B**. In **FIGURE 5A**, the monorail carrier **18** delivers the green tire **24** into the basket **28** when the basket is in the elevated position **58** at a first location along a vertical path which is parallel to an axis through rail **56**. The basket **28** is then lowered, and rotated i.e., pivoted within a horizontal plane about the elevator's vertical support rail **56**, into a third position or location where the green tire **24** can be retrieved by the loader **38** and then loaded into the press 40.

**FIGURE 5B** shows, in simplified schematic form, a third embodiment of the elevator system **63** wherein the arm **29** that supports the basket **28** is not able to rotate in a horizontal plane about the ceiling mounted vertical support post **57**. In this embodiment of the elevator system **63**, the elevator's basket **28** receives the tire from a monorail carrier (not shown) when the elevator system **63** is in the location designated by **A**. The elevator system then moves translationally, under the power of conventional means such as motor **62**, along the upper rail **60** to the location designated by **B** at which point the green tire **24** can be received by the loader **38** associated with a press, not shown in **FIGURE 5B**.

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the scope of the appended claims.

## Claims

1. An automated green tire conveyance system (10) for moving a plurality of green tires (24) to a plurality of tire-curing presses (40); each tire-curing press having an associated press loader (38); and the conveyance system including an overhead monorail track (16) with one or more monorail carriers (18) movable thereon, the automated green tire conveyance system **characterized**
- **by** the press-loader (38) being capable of horizontal movement of a green tire having a vertical axis;
- **by** a plurality of elevator systems (31) each located by and associated with one of the plurality of the tire-curing presses for receiving green tires from the one or more monorail carriers; and
- **by** each of the plurality of elevator systems (31) having an elevator (30) for conveying the green tire (24) from the one or more monorail carriers (18) to the press loader (38) of the tire-curing press by that elevator, such that the elevator presents the green tire to the press loader with a vertical tire axis.

2. The conveyance system (10) of claim 1 **characterized in that** the elevator (30) moves in a vertical path and has attached thereto a supporting arm (29) with a basket (28) connected at the distal end of the supporting arm; and the basket (28) receives the green tire (24) from the one or more monorail carriers (18) at a first location and is moveable to a second location where the green tire is unloaded from the basket by the corresponding loader (38) of the tire-curing press (40) by that elevator.

3. The conveyance system (10) of claim 2 **characterized in that** the supporting arm (29) and the basket (28) are angularly moveable about a vertical supporting rail (32) that extends in the direction of the vertical path.

4. The conveyance system (10) of claim 1 **characterized in that** the elevator system (31) is moveable in horizontal linear translation from a first location where the tire is transferred from the one or more monorail carriers (18) to a third location where the tire is transferred from the elevator system to the press loader (38).

5. The conveyance system (10) of claim 1 **characterized in that** each of the one or more monorail carriers (18) has a tire-grasping apparatus (26) that angularly orients each green tire (24) about its axis such that subsequent angular motions of the elevator system (31) and the press loader (38) are taken into account in delivering the green tire to a predetermined angular orientation within the tire-curing press (40).

6. The conveyance system (10) of claim 2 **characterized in that** the basket (28) angularly orients each green tire (24) about its axis such that subsequent angular motions of the elevator system (31) and the press loader (38) are taken into account in delivering the green tire to a predetermined angular orientation within the tire-curing press (40).

7. The conveyance system (10) of claim 2 **characterized in that** the press loader (38) and the basket (28) of the elevator system (31) can simultaneously store green tires while another tire is processed in the tire-curing press (40).

8. A method for conveying a plurality of green tires (24) to a plurality of tire-curing presses (40) with a plurality of overhead monorail carriers (18), wherein each tire press has an associated press loader (38);
the method **characterized by** the step of
- utilizing a plurality of elevator systems (31), wherein each elevator system is associated with one press loader;
- transferring each green tire (24) from one of the plurality of the monorail carriers to the press loader (38) of one of the plurality of tire-curing presses, the press loader being capable of horizontal movement of a green tire having a vertical tire axis; and
- for each transfer, utilizing the elevator system (31) to control moving the green tire (24) along a vertical path from a first location where the green tire is unloaded from the monorail carrier (18) to a second location below the first location, such that the vertical axis of the green tire is maintained.

9. The method of claim 8 including the step of utilizing the elevator system (31) to angularly move the green tire (24) through a circular arc from the second location to a third location where the green tire is transferred to the press loader (38) of the tire-curing press (40).

10. The method of claim 8 including the step of utilizing the elevator system (31) to translationally moving the green tire (24) horizontally from the second location to a third location where the green tire is transferred to the loader (38) of the tire-curing press (40).

11. The method of claim 8 including the step of angularly orienting each green tire (24) about the axis of the tire such that subsequent angular movements are taken into account in delivering the green tire to the tire-curing press (40) at a predetermined angular orientation within the tire-curing press (40).

12. The method of claim 11 including the step of angularly orienting the green tire (24) while the tire is suspended from the monorail carrier (18).

13. The method of claim 11 including the step of angularly orienting the green tire (24) by rotating a basket (28) connected to an elevator (30) of the elevator system (31) that transfers the tire from the monorail carrier (18) to the press loader (38).

## Patentansprüche

1. Automatisiertes Rohreifen-Fördersystem (10) zum Bewegen einer Vielzahl von Rohreifen (24) zu einer Vielzahl von Reifen-Vulkanisationspressen (40); wobei jede Reifen-Vulkanisationspresse einen zugeordneten Pressenbelader (38) aufweist; und das Fördersystem eine Überkopf-Einschienenbahn (16) mit einem oder mehreren darauf bewegbaren Einzelschienen-Träger(n) (18) enthält und das automatisierte Rohreifen-Fördersystem **dadurch gekennzeichnet ist,**
- **dass** der Pressenbelader (38) zur horizontalen Bewegung eines Rohreifens mit einer vertikalen Achse fähig ist;
- **dass** eine Vielzahl von Anhebesystemen (31) vorgesehen ist, die jeweils bei einer der Vielzahl von Reifen-Vulkanisationspressen gelegen und dieser zugeordnet sind, um Rohreifen von dem einen oder den mehreren Einzelschienen-Trägern aufzunehmen; und
- **dass** jedes der Vielzahl von Anhebesystemen (31) einen Anheber (30) aufweist, um den Rohreifen (24) von dem einen oder von den mehreren Einzelschienen-Träger(n) (18) zu dem Pressenbelader (38) der Reifen-Vulkanisationspresse durch den Anheber zu fördern, so dass der Anheber den Rohreifen dem Pressenbelader mit vertikaler Reifenachse präsentiert.

2. Fördersystem (10) nach Anspruch 1, **dadurch gekennzeichnet, dass** der Anheber (30) sich in einem vertikalen Pfad bewegt und an ihm ein Stützarm (29) mit einem an dem fern liegenden Ende des Stützarmes angeschlossenen Korb (28) angebracht ist; und dass der Korb (28) den Rohreifen (24) von dem einen oder von den mehreren Einzelschienen-Trägern (18) an einem ersten Ort annimmt und zu einem zweiten Ort bewegbar ist, an dem der Rohreifen von dem Korb durch den entsprechenden Belader (38) der Reifen-Vulkanisationspresse (40) durch diesen Anheber entladen wird.

3. Fördersystem (10) nach Anspruch 2, **dadurch gekennzeichnet, dass** der Stützarm (29) und der Korb (28) in einer Winkelrichtung um eine vertikale Stützschiene (32) bewegbar sind, die sich in der Richtung des vertikalen Weges erstreckt.

4. Fördersystem (10) nach Anspruch 1, **dadurch gekennzeichnet, dass** das Anhebesystem (31) in horizontaler linearer Überführung von einem ersten Ort, an dem der Reifen von dem einen oder von den mehreren Einzelschienen-Träger(n) (18) übertragen wird, zu einem dritten Ort bewegbar ist, an dem der Reifen von dem Anhebesystem zu dem Pressenbelader (38) überführt wird.

5. Fördersystem (10) nach Anspruch 1, **dadurch gekennzeichnet, dass** der eine Einzelschienen-Träger oder jeder der mehreren Einzelschienen-Träger (18) eine Reifen-Greifvorrichtung (26) aufweist, die jeden Rohreifen (24) um seine Achse in seiner Winkelrichtung so ausrichtet, dass darauf folgende Winkelbewegungen des Anhebesystems (31) und des Pressenbeladers (38) beim Zuliefern des Rohreifens in einer vorgegebenen Winkelausrichtung innerhalb der Reifen-Vulkanisationspresse (40) berücksichtigt werden.

6. Fördersystem (10) nach Anspruch 2, **dadurch gekennzeichnet, dass** der Korb (28) jeden Rohreifen (24) in Winkelrichtung um seine Achse so ausrichtet, dass darauf folgende Winkelbewegungen des Anhebesystems (31) und des Pressenbeladers (38) beim Abliefern des Rohreifens zu einer vorgegebenen Winkelausrichtung innerhalb der Reifen-Vulkanisationspresse (40) berücksichtigt werden.

7. Fördersystem (10) nach Anspruch 2, **dadurch gekennzeichnet, dass** der Pressenbelader (38) und der Korb (28) des Anhebesystems (31) gleichzeitig Rohreifen speichern können, während ein anderer Reifen in der Reifen-Vulkanisationspresse (40) bearbeitet wird.

8. Verfahren zum Fördern einer Vielzahl von Rohreifen (24) zu einer Vielzahl von Reifen-Vulkanisationspressen (40), mit einer Vielzahl von Überkopf Einzelschienen-Trägern (18), wobei jede Reifenpresse einen zugeordneten Pressenbelader (38) aufweist und das Verfahren durch den Schritt gekennzeichnet ist,
- dass eine Vielzahl von Anhebesystemen (31) benutzt wird, wobei jedes Anhebesystem einem Pressenbelader zugeordnet ist;
- dass jeder Rohreifen (24) von einem der Vielzahl von Einzelschienen-Trägern zu dem Pressenbelader (38) einer der Vielzahl von Reifen-Vulkanisationspressen überführt wird, wobei der Pressenbelader zu einer horizontalen Bewegung eines eine vertikale Reifenachse aufweisenden Rohreifens fähig ist; und
- bei jeder Übertragung das Anhebesystems (31) zum Steuern der Bewegung des Rohreifens (24) längs eines vertikalen Weges von einem ersten Ort, an dem der Rohreifen von dem Einzelschienen-Träger (18) entladen wird, zu einem zweiten Ort, unter dem ersten Ort so benutzt wird, dass die vertikale Achse des Rohreifens beibehalten wird.

9. Verfahren nach Anspruch 8 mit dem Schritt,
dass das Anhebesystem (31) zur Winkelbewegung des Rohreifens (24) um einen Kreisbogen in Winkelrichtung von einem zweiten Ort zu einem dritten Ort benutzt wird, an dem der Rohreifen zu dem Pressenbelader (38) der Reifen-Vulkanisationspresse (40) überführt wird.

10. Verfahren nach Anspruch 8 mit dem Schritt,
dass das Anhebesystem (31) zur Verschiebebewegung des Rohreifens (24) in horizontaler Richtung von dem zweiten Ort zu einem dritten Ort benutzt wird, an dem der Rohreifen zu dem Belader (38) der Reifen-Vulkanisationspresse (40) übertragen wird.

11. Verfahren nach Anspruch 8 mit dem Schritt,
dass jeder Rohreifen (24) um die Reifenachse so in Winkelrichtung ausgerichtet wird, dass beim Zuliefern des Rohreifens zu der Reifen-Vulkanisationspresse (40) mit einer vorgegebenen Winkelausrichtung darauf folgende Winkelbewegungen innerhalb der Reifen-Vulkanisationspresse (40) berücksichtigt werden.

12. Verfahren nach Anspruch 11 mit dem Schritt,
dass der Rohreifen (24) in Bezug auf den Winkel ausgerichtet wird, während der Reifen an dem Einzelschienen-Träger (18) aufgehängt ist.

13. Verfahren nach Anspruch 11 mit dem Schritt,
dass der Rohreifen (24) in Bezug auf den Winkel ausgerichtet wird, indem ein Korb (28) verdreht wird, der mit einem Anheber (30) des Anhebesystems (31) verbunden ist, welcher den Reifen von dem Einzelschienen-Träger (18) zu dem Pressenbelader (38) überführt.

## Revendications

1. Système automatique (10) pour le transport de bandages pneumatiques à l'état cru destiné à déplacer plusieurs bandages pneumatiques à l'état cru en direction de plusieurs presses de vulcanisation de bandages pneumatiques (40) ; chaque presse de vulcanisation de bandages pneumatiques comportant un dispositif de chargement de presse associé (38) ; et le système de transport englobant une voie monorail aérienne (16) le long de laquelle se déplacent un ou plusieurs chariots monorails (18), le système automatique pour le transport de bandages pneumatiques à l'état cru étant **caractérisé**
- **par le fait que** le dispositif de chargement de presse (38) est capable de déplacer en direction horizontale un bandage pneumatique à l'état cru comportant un axe vertical ;
- **par le fait que** plusieurs systèmes d'élévation (31) sont disposés respectivement à proximité d'une desdites plusieurs presses de vulcanisation de bandages pneumatiques et sont associés auxdites presses pour recevoir des bandages pneumatiques à l'état cru à partir dudit ou desdits plusieurs chariots monorails ;
- **par le fait que** chacun desdits plusieurs systèmes d'élévation (31) possède un élévateur (30) pour transporter le bandage pneumatique (24) depuis ledit ou lesdits plusieurs chariots monorails (18) jusqu'au dispositif de chargement de presse (38) de la presse de vulcanisation de bandages pneumatiques à l'aide dudit élévateur, de telle sorte que l'élévateur présente le bandage pneumatique à l'état cru au dispositif de chargement de presse avec l'axe vertical du bandage pneumatique.

2. Système de transport (10) selon la revendication 1, **caractérisé en ce que** l'élévateur (30) se déplace le long d'une voie verticale, un bras de support (29) étant fixé audit élévateur et un panier (28) étant relié à l'extrémité distale du bras de support, le panier (28) étant destiné à recevoir le bandage pneumatique à l'état cru (24) à partir dudit ou desdits plusieurs chariots monorails (18) à un premier endroit et étant à même de se déplacer jusqu'à un deuxième endroit dans lequel le bandage pneumatique à l'état cru est déchargé du panier via le dispositif de chargement correspondant (38) de la presse de vulcanisation de bandages pneumatiques (40) à l'aide dudit élévateur.

3. Système de transport (10) selon la revendication 2, **caractérisé en ce que** le bras de support (29) et le panier (28) sont aptes à effectuer un déplacement angulaire autour d'un rail de support vertical (32) qui s'étend dans la direction de la voie verticale.

4. Système de transport (10) selon la revendication 1, **caractérisé en ce que** le système d'élévation (31) est mobile en effectuant un mouvement de translation linéaire horizontal depuis un premier endroit dans lequel le bandage pneumatique est transféré à partir dudit ou desdits plusieurs chariots monorails (18) jusqu'à un troisième endroit dans lequel le bandage pneumatique est transféré du système d'élévation au dispositif de chargement de presse (38).

5. Système de transport (10) selon la revendication 1, **caractérisé en ce que** chacun dudit ou desdits plusieurs chariots monorails (18) possède un appareil de saisie de bandages pneumatiques (26) qui oriente de manière angulaire chaque bandage pneumatique à l'état cru (24) autour de son axe de telle sorte que les mouvements angulaires ultérieurs du système d'élévation (31) et du dispositif de chargement de presse (38) sont pris en compte dans la distribution du bandage pneumatique à l'état cru en une orientation angulaire prédéterminée à l'intérieur de la presse de vulcanisation de bandages pneumatiques (40).

6. Système de transport (10) selon la revendication 2, **caractérisé en ce que** le panier 28 oriente de manière angulaire chaque bandage pneumatique à l'état cru 24 autour de son axe de telle sorte que les mouvements angulaires ultérieurs du système d'élévation (31) et du dispositif de chargement de presse (38) sont pris en compte dans la distribution du bandage pneumatique à l'état cru en une orientation angulaire prédéterminée à l'intérieur de la presse de vulcanisation de bandages pneumatiques (40).

7. Système de transport (10) selon la revendication 2, **caractérisé en ce que** le dispositif de chargement de presse (38) et le panier (28) du système d'élévation (31) sont en mesure de stocker de manière simultanée des bandages pneumatiques à l'état cru, tandis qu'un autre bandage pneumatique est traité dans la presse de vulcanisation de bandages pneumatiques (40).

8. Procédé pour transporter plusieurs bandages pneumatiques à l'état cru (24) à plusieurs presses de vulcanisation de bandages pneumatiques (40) avec plusieurs chariots monorails aériens (18), dans lequel chaque presse de bandages pneumatiques possède un dispositif de chargement de presse associé (38), le procédé étant **caractérisé par** les étapes consistant à :
- utiliser plusieurs systèmes d'élévation (31), dans lequel chaque système d'élévation est associé à un dispositif de chargement de presse ;
- transférer chaque bandage pneumatique à l'état cru (24) depuis un des chariots monorails jusqu'au dispositif de chargement de presse (38) d'une desdites plusieurs presses de vulcanisation de bandages pneumatiques, le dispositif de chargement de presse étant capable de déplacer en direction horizontale un bandage pneumatique à l'état cru comportant un axe de bandage pneumatique vertical ; et
- pour chaque transfert, utiliser le système d'élévation (31) pour guider le mouvement du bandage pneumatique à l'état cru (24) le long d'une voie verticale depuis un premier endroit dans lequel le bandage pneumatique à l'état cru est déchargé du chariot monorail (18) jusqu'à un deuxième endroit situé en dessous du premier endroit de telle sorte que l'axe vertical du bandage pneumatique à l'état cru est maintenu.

9. Procédé selon la revendication 8, englobant les étapes consistant à utiliser le système d'élévation (31) pour déplacer le bandage à l'état cru (24) de manière angulaire à travers un arc de cercle depuis le deuxième endroit jusqu'à un troisième endroit dans lequel le bandage pneumatique à l'état cru est transféré au dispositif de chargement de presse (38) de la presse de vulcanisation de bandages pneumatiques (40).

10. Procédé selon la revendication 8, englobant les étapes consistant à utiliser le système d'élévation (31) pour soumettre le bandage pneumatique à l'état cru (24) à un mouvement de translation en direction horizontale depuis le deuxième endroit jusqu'à un troisième endroit dans lequel le bandage pneumatique à l'état cru est transféré au dispositif de chargement (38) de la presse de vulcanisation de bandages pneumatiques (40).

11. Procédé selon la revendication 8, englobant l'étape consistant à orienter en direction angulaire chaque bandage pneumatique à l'état cru (24) autour de l'axe du bandage pneumatique de telle sorte que les mouvements angulaires ultérieurs sont pris en compte lors de la distribution du bandage pneumatique à l'état cru à la presse de vulcanisation de bandages pneumatiques (40) à une orientation angulaire prédéterminée à l'intérieur de la presse de vulcanisation de bandages pneumatiques 40.

12. Procédé selon la revendication 11, englobant les étapes consistant à orienter de manière angulaire le bandage pneumatique à l'état cru (24), tandis que le bandage pneumatique est suspendu au chariot monorail (18).

13. Procédé selon la revendication 11, englobant l'étape consistant à orienter de manière angulaire le bandage pneumatique (24) à l'état cru en faisant tourner un panier (28) relié à un élévateur (30) du système d'élévation (31), qui transfère le bandage pneumatique depuis le chariot monorail (18) jusqu'au dispositif de chargement de presse (38).
